# EUROPÄISCHE PATENTSCHRIFT

(11) **EP 3 707 791 B1**
(45) Veröffentlichungstag und Bekanntmachung des Hinweises auf die Patenterteilung: **07.06.2023**
(21) Anmeldenummer: 18789390.4
(22) Anmeldetag: 17.10.2018
(51) Int. Cl.: H01T 4/06

(54) **ÜBERSPANNUNGSSCHUTZEINRICHTUNG, BESTEHEND AUS EINEM ISOLIERENDEN GEHÄUSE ZUR AUFNAHME MINDESTENS EINES ÜBERSPANNUNGSABLEITERS**
OVERVOLTAGE PROTECTION DEVICE CONSISTING OF AN ISOLATING HOUSING FOR RECEIVING AT LEAST ONE SURGE ARRESTER
DISPOSITIF DE PROTECTION CONTRE LES SURTENSIONS COMPRENANT UN BOÎTIER ISOLANT DESTINÉ À RECEVOIR AU MOINS UN PARASURTENSEUR

(30) Priorität: 07.11.2017 DE 102017126007; 19.12.2017 DE 102017130499
(43) Veröffentlichungstag der Anmeldung: 16.09.2020
(73) Patentinhaber: DEHN SE, 92318 Neumarkt i.d. OPf. (DE)
(72) Erfinder: EHRHARDT, Arnd, 92318 Neumarkt (DE); ZAHLMANN, Peter, 92318 Neumarkt (DE); KOLLER, Kerstin, 92331 Parsberg (DE)
(74) Vertreter: Isarpatent
(86) Internationale Anmeldenummer: PCT/EP2018/078418
(87) Internationale Veröffentlichungsnummer: WO 2019/091733

(56) Entgegenhaltungen:
- EP-A2- 2 432 089
- DE-U1-202013 002 222

## Beschreibung

Die Erfindung geht aus von einer Überspannungsschutzeinrichtung, bestehend aus einem isolierendem Gehäuse zur Aufnahme mindestens eines Überspannungsableiters, insbesondere einer Funkenstrecke oder eines Varistors, wobei das Gehäuse Öffnungen zum elektrischen Anschluss und zum mechanischen Fixieren sowie mindestens eine ebene Gehäuseunterseite aufweist.

Die DE 20 2013 00 22 22 U1 offenbart eine Überspannungsschutzeinrichtung bestehend aus einem isolierendem Gehäuse zur Aufnahme mindestens eines Überspannungsableiters, insbesondere einer Funkenstrecke und/oder eines Varistors, und den Grifflaschen eines NH-Sicherungseinsatzes, wobei das Gehäuse Öffnungen zum elektrischen Anschluss und zum mechanischen Fixieren sowie mindestens eine ebene Gehäuseunterseite aufweist.

Aus dem Stand der Technik sind NH-Sicherungseinsätze mit oder ohne Kombinationskennmelder sowie mit oder ohne spannungsführenden Grifflaschen vorbekannt. Derartige Ganzbereichssicherungseinsätze dienen dem Kabel- und Leitungsschutz für unterschiedlichste Anwendungen. Mit Hilfe der Grifflaschen können NH-Sicherungseinsätze gehandhabt, insbesondere auch unter Spannung eingesetzt oder ausgetauscht werden. NH-Sicherungseinsätze finden sich beispielsweise in Hausanschlusskästen im Bereich der Niederspannungseinspeisung.

Die Abmessungen entsprechender NH-Sicherungseinsätze sowohl hinsichtlich der Kontaktmesser, der isolierenden Gehäuse aber auch der Grifflaschen sind in einschlägigen Normen geregelt.

Aus dem deutschen Gebrauchsmuster DE 20 2013 002 222 U1 ist eine Überspannungsschutzeinrichtung mit Kurzschlussfunktion zum Anlagen- und Personenschutz vorbekannt.

Die dortige Einrichtung weist in einem gemeinsamen Gehäuse mindestens ein Überspannungsschutzelement als auch eine thermisch auslösbare Kurzschließereinrichtung auf.

Nach der Lehre gemäß DE 20 2013 002 222 U1 ist die Einrichtung zum Einsetzen in ein NH-Sicherungsunterteil ausgeführt. Diesbezüglich ist das Gehäuse räumlich und geometrisch analog einem NH-Sicherungseinsatz mit entsprechenden Kontaktmessern ausgebildet. Insofern ist die Überspannungsschutzeinrichtung mit den Abmessungen einer NH-Sicherung in einen NH-Sicherungslasttrenner einsetzbar. Das Überspannungsschutzelement ist also bevorzugt in einpoliger Ausführung in der Geometrie einer NH-Sicherung gefertigt. Es handelt sich also bei der vorbekannten Lösung um einen Überspannungsschutz in NH-Bauform mit internem Kurzschließer für Netzanwendungen.

Ein Nachrüsten von Überspannungsschutzeinrichtungen hinsichtlich bereits vorhandener Hausanschlusskästen mit NH-Sicherungen unter Erhalt der Sicherungsfunktion ist im Hinblick auf die DE 20 2013 002 222 U1 nicht möglich.

Aus dem Vorgenannten ist es daher Aufgabe der Erfindung, eine weiterentwickelte Überspannungsschutzeinrichtung, bestehend aus einem isolierenden Gehäuse zur Aufnahme mindestens eines Überspannungsableiters anzugeben, welche ein- oder mehrpolig in einfacher Weise mit NH-Sicherungen in Kontakt bringbar ist, ohne dass aufwändige Montage oder sonstige Installationsarbeiten erforderlich werden.

Die Lösung der Aufgabe der Erfindung erfolgt mit einer Überspannungsschutzeinrichtung gemäß der Merkmalskombination nach Patentanspruch 1, wobei die Unteransprüche mindestens zweckmäßige Ausgestaltungen und Weiterbildungen umfassen.

Es wird demnach von einer Überspannungsschutzeinrichtung ausgegangen, die aus einem isolierenden Gehäuse besteht.

Im isolierenden Gehäuse befindet sich mindestens ein Überspannungsableiter, zum Beispiel eine Funkenstrecke und/oder ein Varistor. Das Gehäuse besitzt darüber hinaus Öffnungen zum elektrischen Anschluss und zum mechanischen Fixieren. Weiterhin weist das Gehäuse mindestens eine ebene Gehäuseunterseite auf.

Erfindungsgemäß besitzt die Gehäuseunterseite Durchbrüche, deren Kontur und deren Abstand den Grifflaschen eines NH-Sicherungseinsatzes entsprechend ausgebildet ist.

Es kann also das Gehäuse, enthaltend die eigentliche Überspannungsschutzeinrichtung, auf einen NH-Sicherungseinsatz oder eine Gruppe von NH-Sicherungseinsätzen aufgesteckt und mit diesem Einsatz oder dieser Sicherungsgruppe verbunden werden.

Mindestens eine der Grifflaschen ist bei der Ausführung von spannungsführenden Grifflaschen mittels im Gehäuseinneren befindlichen Anschlusselementen elektrisch kontaktierbar.

Hierbei kann es sich um selbstschneidende Kontaktmesser handeln oder aber auch um Kontaktklemmen, die von der Gehäuseoberseite her zugänglich und betätigbar sind.

Die Grifflaschen zur Aufnahme des erfindungsgemäß weitergebildeten Gehäuses der Überspannungsschutzeinrichtung erfüllen also eine Doppelfunktion, indem einerseits die Überspannungsschutzeinrichtung mechanisch auf der betreffenden Sicherung gehalten und andererseits eine elektrische Kontaktierung realisierbar ist.

Zur leichteren Handhabung kann an einer der Gehäuseunterseite gegenüberliegenden Gehäuseseite, insbesondere der Gehäuseoberseite, ein NH-sicherungstypisches Grifflaschenpaar ausgebildet werden, insbesondere angeformt sein. Diese Grifflaschen bzw. das Grifflaschenpaar dient dann als Montage- oder Demontagehilfe mit dem üblichen Werkzeug zum Ziehen oder Stecken von NH-Sicherungen.

Weiterhin befinden sich erfindungsgemäß am oder im Gehäuse der Überspannungsschutzeinrichtung Mittel zur Aufnahme eines Neutralleiters und/oder Verbindung des Überspannungsableiters mit einem Neutralleiter, insbesondere einer Neutralleiterschiene.

In einer Weiterbildung der Erfindung, die insbesondere dann von Vorteil ist, wenn die Grifflaschen der NH-Sicherungseinsätze nicht spannungsführend sind, erstrecken sich von der Gehäuseunterseite, im Gehäuseinneren mit dem jeweiligen Überspannungsableiter verbundene, Gabelkontakte mit schlitzförmiger Öffnung.

Die jeweilige schlitzförmige Öffnung umgreift im aufgesteckten Zustand ein jeweiliges NH-Sicherungskontaktmesser und stellt die notwendige elektrische Kontaktverbindung her.

In einer vorteilhaften weiteren Ausführungsform der Erfindung weist das Gehäuse einen Fortsatz für einen Verbund mit einem NH-Sicherungseinsatz auf, wobei der Fortsatz den NH-Sicherungseinsatz an den kontaktmesserfreien Seiten umgreift und fixiert.

Dies bedeutet, dass dieser Verbund in seiner Gesamtheit in eine Kontaktmesseraufnahme eingesteckt werden und in gleicher Weise wieder bei Notwendigkeit ausgetauscht und ersetzt werden kann.

In einer Weiterbildung der Erfindung weist das Gehäuse einen bevorzugt gehäuseoberseitig befindlichen oder an der Gehäuseseite verlaufenden durchgehenden Schlitz zur Aufnahme der Neutralleiterschiene auf.

Weiterhin kann am Gehäuse ein Klemmbügel zum Fixieren der Neutralleiterschiene ausgebildet werden.

Zur erleichterten Handhabung ist am oder im Gehäuse ein Ansatzpunkt zum Gegenhalten des NH-Sicherungseinsatzes beim Ziehen einer aufgesteckten Überspannungsschutzeinrichtung vorgesehen.

Grundsätzlich kann die erfindungsgemäße Überspannungsschutzeinrichtung zur Kombination mit einem NH-Sicherungseinsatz einpolig aber auch mehrpolig als Gehäuseverbund ausgeführt werden.

Es wird also die erfindungsgemäße Überspannungsschutzeinrichtung einpolig oder mehrpolig, insbesondere dreipolig an Sicherungen oder Sicherungsanordnungen mit Hilfe der erwähnten Gabelkontakte oder durch Klemmverbindungen an den Grifflaschen der Sicherungen elektrisch kontaktiert. Eine entsprechende Kombination beider Kontaktierungsarten ist ebenfalls möglich. Die Kontaktierung mittels Gabelkontakt und schlitzförmiger Öffnung ist insbesondere für solche Sicherungen relevant, welche isolierte Grifflaschen aufweisen.

Die am Gehäuse der Überspannungsschutzeinrichtung vorgesehenen NH-sicherungstypischen Grifflaschen dienen als Montagehilfe, insbesondere bei einer Montage unter Spannung.

Bei der beschriebenen Verbundanordnung hinsichtlich NH-Sicherung und Überspannungsschutzeinrichtung kann die Überspannungsschutzeinrichtung mit der Sicherung als gemeinsames Bauteil mit Überspannungsschutz im Querzweig sowie Sicherung im Längszweig ausgeliefert werden.

Die Erfindung soll nachstehend anhand von Ausführungsbeispielen und unter Zuhilfenahme von Figuren näher erläutert werden.

Hierbei zeigen:

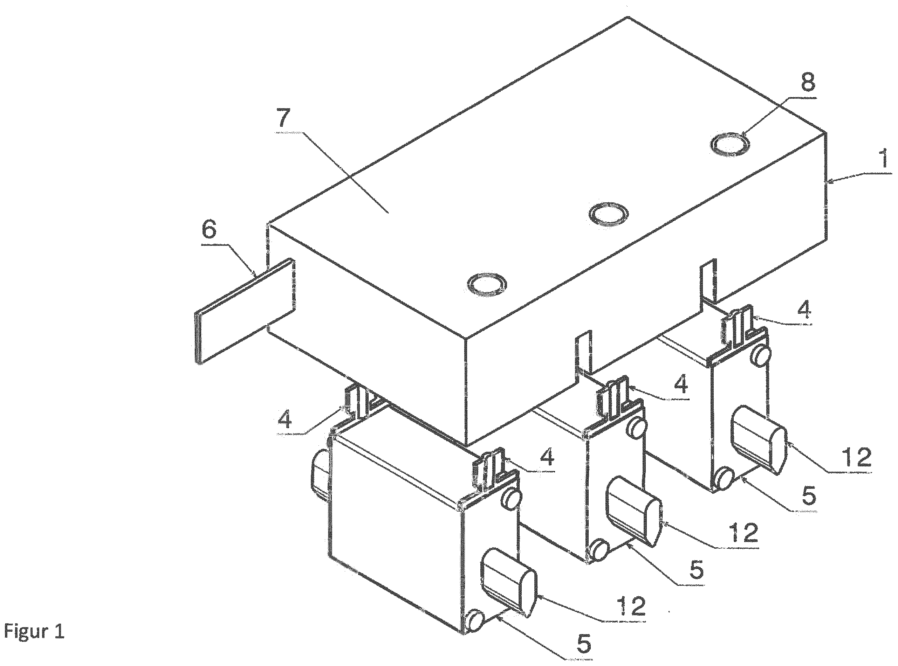

- Fig. 1: eine Darstellung einer ersten Ausführungsform der Überspannungsschutzeinrichtung, aufsteckbar auf drei NH-Sicherungseinsätze, die sich in einem nicht gezeigten Sicherungsunterteil befinden in einer Ansicht vor dem ausgeführten Aufsteckvorgang;

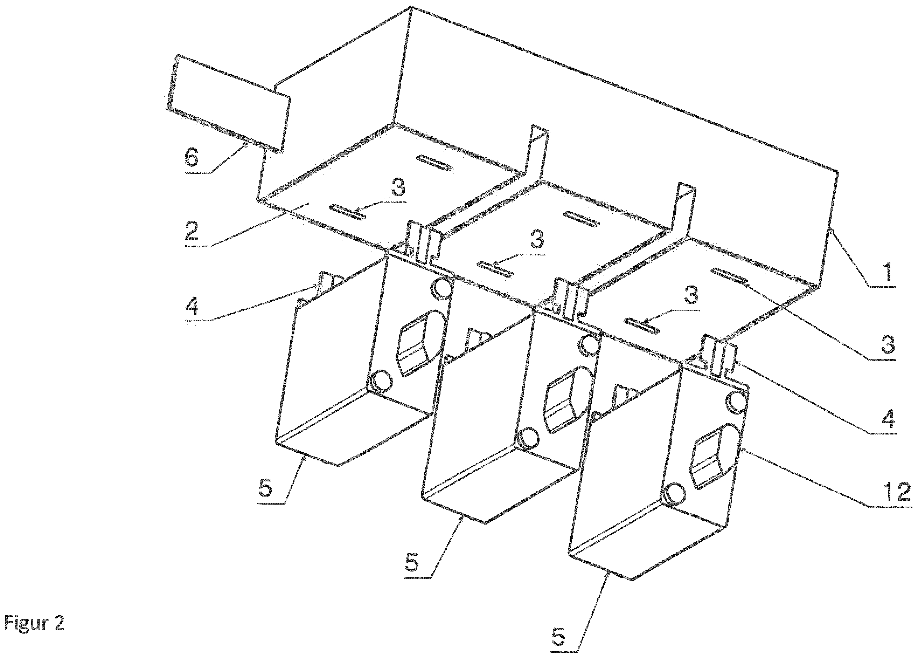

- Fig. 2: eine Darstellung ähnlich derjenigen nach Fig. 1, jedoch mit erkennbarer Gehäuseunterseite und dortigen Durchbrüchen, die in Abstand und Kontur den Grifflaschen der NH-Sicherungseinsätze entsprechen;

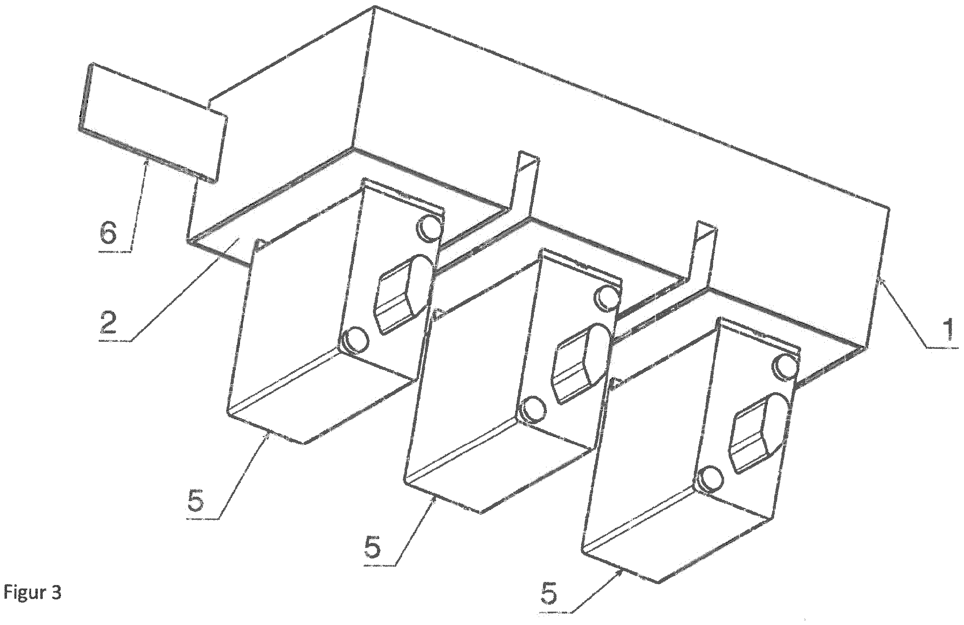

- Fig. 3: eine Darstellung im Ergebnis des vollzogenen Aufsteckvorganges;
- Fig. 4: eine weitere Ausführungsform zur Überspannungsschutzeinrichtung mit zusätzlichen Gabelkontakten und schlitzförmiger Öffnung, die eine Kontaktierung mit einem jeweiligen zugeordneten NH-Sicherungskontaktmesser ermöglichen;
- Fig. 5: eine Darstellung ähnlich derjenigen nach Fig. 4 mit erkennbarer Unterseite und den Durchbrüchen zur Aufnahme der Grifflaschen der jeweiligen NH-Sicherungseinsätze;
- Fig. 6: eine Darstellung im gesteckten Zustand, wobei erkennbar ist, in welcher Weise die Gabelkontakte die notwendige Kontaktverbindung zu den NH-Sicherungskontaktmessern hergestellt haben;
- Fig. 7: eine Darstellung von drei einpoligen Überspannungsschutzeinrichtungen der erfindungsgemäßen Art als gemeinsamer Verbund mit einer Neutralleiterschiene und oberseitig befindlichen Grifflaschen zur erleichterten Montage und Demontage der Überspannungsschutzeinrichtungen, wobei die Gehäuse der Überspannungsschutzeinrichtungen jeweils einen Fortsatz für einen Verbund mit einem NH-Sicherungseinsatz aufweisen;
- Fig. 8: eine Darstellung ähnlich derjenigen nach Fig. 7 mit einer einpoligen Überspannungsschutzeinrichtung, die einen Verbund mit einer NH-Sicherungseinrichtung bildet; und
- Fig. 9: eine einzelne, einpolige Überspannungsschutzeinrichtung mit isolierten Grifflaschen zum Aufsetzen auf eine NH-Sicherung im kontaktierten Zustand an potentialbehafteter Grifflasche.

Wie in den Figuren dargestellt, geht die erfindungsgemäße Überspannungsschutzeinrichtung von einem isolierenden Gehäuse 1 aus. Im Inneren des Gehäuses befinden sich nicht gezeigte Überspannungsableiter, insbesondere ausgebildet als Funkenstrecke, Varistor oder eine Kombination derartiger Bauteile.

Die Gehäuseunterseite 2 besitzt Durchbrüche 3.

Die Kontur der Durchbrüche 3 und der Abstand dieser ist den Grifflaschen 4 eines jeweiligen NH-Sicherungseinsatzes 5 entsprechend ausgebildet.

Wie aus der Figurenabfolge 1 bis 3 ersichtlich ist, kann das Gehäuse 1 der Überspannungsschutzeinrichtung durch die Ausbildung der Durchbrüche 3 an der Gehäuseunterseite auf NH-Sicherungseinsätze 5 aufgesteckt und entsprechend mechanisch fixiert, aber auch elektrisch verbunden werden.

Bei einer Ausführungsform der Erfindung ist mindestens eine der Grifflaschen 4 im Gehäuseinneren mit dort befindlichen elektrischen Anschlusselementen des oder der betreffenden Überspannungsableiter kontaktiert.

Weiterhin sind am oder im Gehäuse 1 Mittel zur Aufnahme und/oder zur Verbindung der im Gehäuse befindlichen Überspannungsableiter mit einem Neutralleiter, insbesondere einer Neutralleiterschiene 6, vorgesehen.

Von der Gehäuseoberseite 7 aus sind Zugangsöffnungen 8 vorhanden, mit deren Hilfe zum Beispiel eine elektrische Klemmkontaktierung hinsichtlich der entsprechenden Grifflasche 4 des NH-Sicherungseinsatzes 5 hergestellt werden kann.

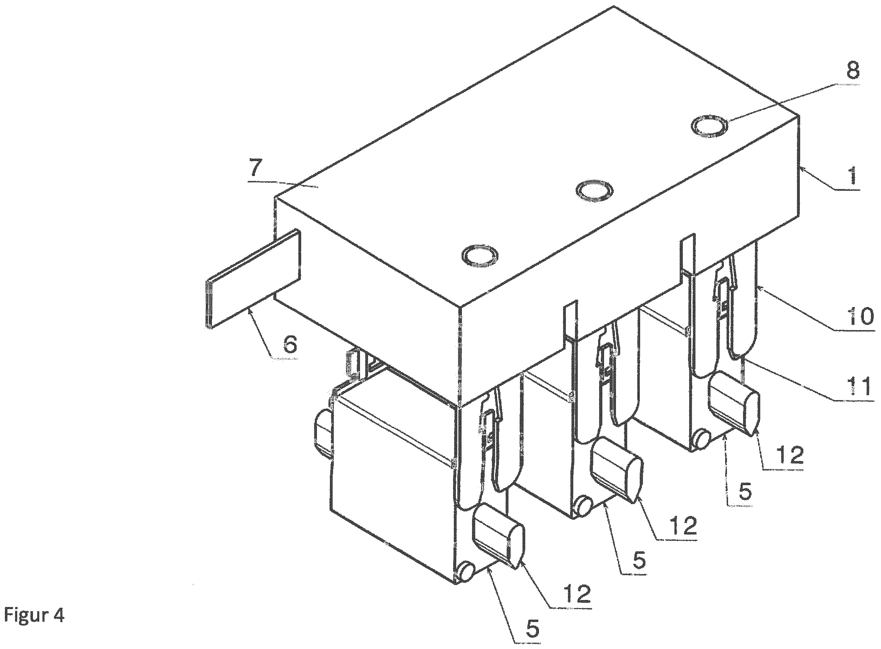

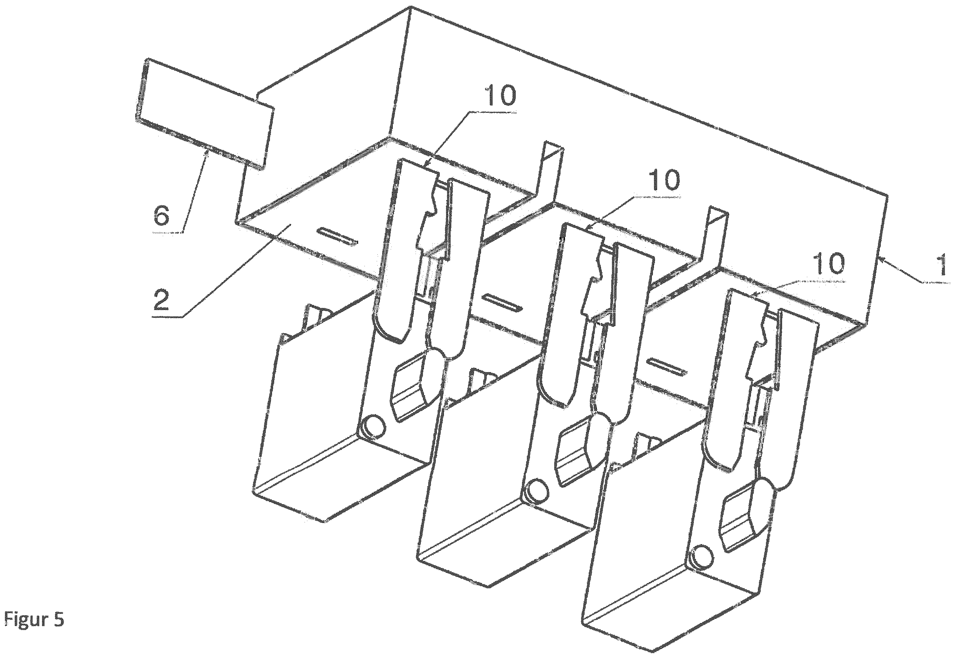

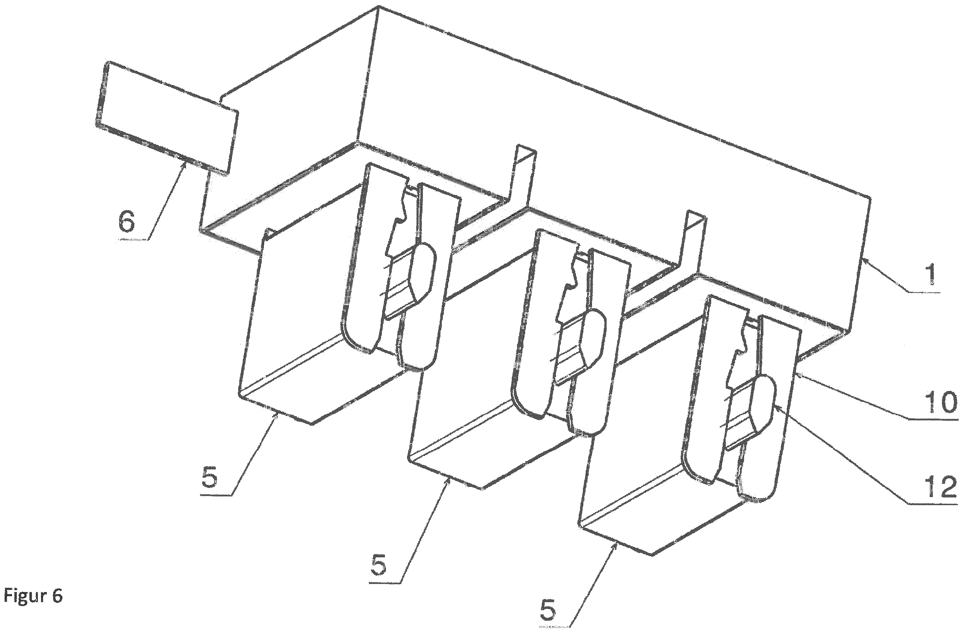

Bei der Ausführungsform der erfindungsgemäßen Überspannungsschutzeinrichtung gemäß den Figuren 4 bis 6 erstrecken sich von der Gehäuseunterseite zwei, im Gehäuseinneren mit dem dortigen Überspannungsableiter verbundene, Gabelkontakte 10.

Diese Gabelkontakte 10 weisen eine schlitzförmige Öffnung 11 auf.

Diese schlitzförmige Öffnung 11 ist so realisiert, dass eine jeweilige Öffnung im aufgesteckten Zustand ein jeweiliges NH-Sicherungskontaktmesser 12 umgreift, um eine elektrische Kontaktverbindung herzustellen.

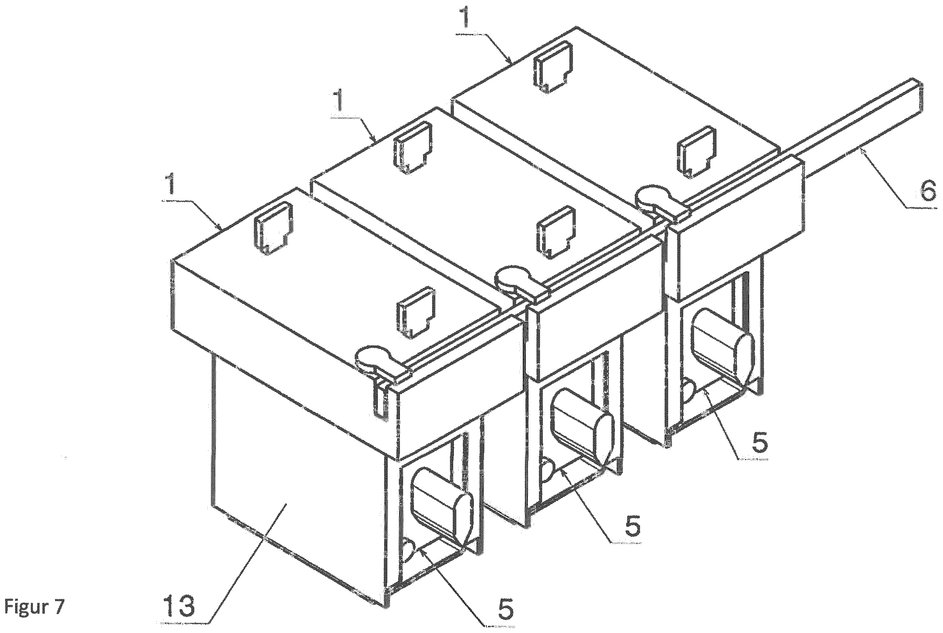

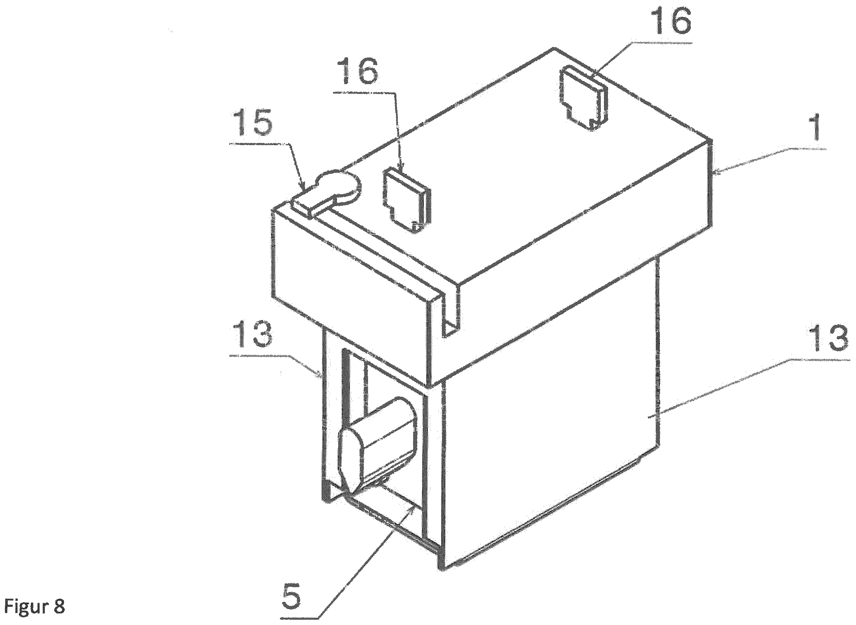

Anhand der Figuren 7 und 8 soll erläutert werden, dass in Weiterbildung der erfindungsgemäßen Überspannungsschutzeinrichtung das Gehäuse 1 einen Fortsatz 13 für einen Verbund mit einem NH-Sicherungseinsatz 5 aufweist, wobei der Fortsatz 13 den NH-Sicherungseinsatz 5 an den kontaktmesserfreien Seiten umgreift und fixiert. Bevorzugt ist der Fortsatz 13, wie in der Figur 8 erkennbar, U-förmig ausgeführt und weist eine unterseitige Öffnung auf, über die ein entsprechender NH-Sicherungseinsatz eingeführt und mit der Überspannungsschutzeinrichtung verbunden werden kann.

Mit Hilfe der Grifflaschen 16 kann der Verbund mit NH-Sicherungseinsatz 5 gezogen werden.

Danach kann die überlastete Sicherung 5 vor Ort ausgetauscht und der so instand gesetzte Verbund wieder montiert werden.

Ganz grundsätzlich kann jedoch die betreffende NH-Sicherung auch fest innerhalb eines gemeinsamen Gehäuses mit Überspannungsschutzgerät angeordnet werden, wobei bei einer Überlastung einer der Komponenten ein gemeinsamer Austausch erfolgt. Eine solche technische Ausführungsform ist insbesondere dann von Vorteil, wenn eine spezielle Abstimmung zwischen Sicherung und Überspannungsschutzgerät erforderlich ist.

Die in den Figuren gezeigte Neutralleiterschiene 6 für bevorzugt mehrpolige Ausführungsformen ist ebenfalls nur als ein Beispiel anzusehen.

Grundsätzlich kann neben der Verbindung einzelner Pole mit einer gemeinsamen Schiene auch eine Verbindung einzelner einpoliger Überspannungsschutzgeräte mittels Brücke oder Stecker, das heißt als Einzelanschluss oder Einzelverbindung, realisiert werden.

In Weiterbildung der Erfindung besitzt das Gehäuse 1 einen gehäuseoberseitig oder aber auch seitlich befindlichen, durchgehenden Schlitz 14, welcher der Aufnahme des Neutralleiters 6 dient.

Am Gehäuse 1 können darüber hinaus Klemmbügel 15 zum Fixieren des Neutralleiters, insbesondere der Neutralleiterschiene 6, ausgebildet werden.

Gemäß der Darstellung nach Figur 7 bilden drei einpolige Überspannungsschutzeinrichtungen einen Verbund mit der Neutralleiterschiene 6. Entsprechende isolierte Grifflaschen können zu Montage- oder Demontagezwecken benutzt werden. Die Neutralleiterschiene 6 kann durch eine Klemmverbindung nachträglich an den aufgesteckten einzelnen Überspannungsschutzeinrichtungen befestigt werden.

Durch den Verbund der Überspannungsschutzeinrichtungen mit den Sicherungen kann ein gemeinsamer Austausch bzw. Einsatz erfolgen.

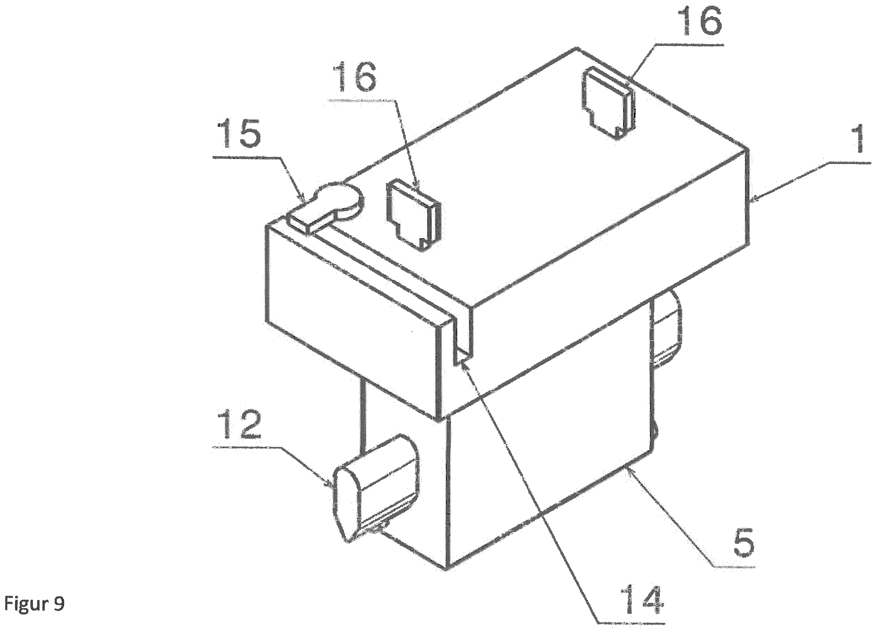

Bei der Darstellung nach Fig. 9 wird von einer einpoligen Überspannungsschutzeinrichtung mit isolierten Grifflaschen 16 ausgegangen.

## Patentansprüche

1. Überspannungsschutzeinrichtung, bestehend aus einem isolierenden Gehäuse (1) zur Aufnahme mindestens eines Überspannungsableiters, insbesondere einer Funkenstrecke und/oder eines Varistors, wobei das Gehäuse (1) Öffnungen zum elektrischen Anschluss und zum mechanischen Fixieren sowie mindestens eine ebene Gehäuseunterseite aufweist,
**dadurch gekennzeichnet, dass**
die Gehäuseunterseite (2) Durchbrüche (3) besitzt, deren Kontur und Abstand den Grifflaschen (4) eines NH-Sicherungseinsatzes (5) entsprechend ausgebildet ist, derart, dass das Gehäuse (1) auf einen NH-Sicherungseinsatz oder eine Gruppe von NH-Sicherungseinsätzen aufsteck- und mit dieser verbindbar ist, wobei mindestens eine der Grifflaschen (4) mittels im Gehäuseinneren befindlichen Anschlusselementen elektrisch kontaktierbar ist, wobei am oder im Gehäuse (1) Mittel zur Aufnahme eines Neutralleiters und/oder Verbindung des Überspannungsableiters mit einem Neutralleiter, insbesondere einer Neutralleiterschiene (6), vorgesehen sind.

2. Überspannungsschutzeinrichtung nach Anspruch 1,
**dadurch gekennzeichnet, dass**
an einer der Gehäuseunterseite (2) gegenüberliegenden Gehäuseseite NH-sicherungstypische Grifflaschen (16) ausgebildet, insbesondere angeformt sind.

3. Überspannungsschutzeinrichtung nach einem der vorangegangenen Ansprüche,
**dadurch gekennzeichnet, dass**
sich von der Gehäuseunterseite (2), im Gehäuseinneren mit dem jeweiligen Überspannungsableiter verbundene, Gabelkontakte (10) mit schlitzförmiger Öffnung (11) erstrecken, wobei die jeweilige schlitzförmige Öffnung (11) im aufgesteckten Zustand ein jeweiliges NH-Sicherungskontaktmesser (12) umgreift und eine elektrische Kontaktverbindung herstellt.

4. Überspannungsschutzeinrichtung nach einem der vorangegangenen Ansprüche,
**dadurch gekennzeichnet, dass**
das Gehäuse (1) einen Fortsatz (13) für einen Verbund mit einem NH-Sicherungseinsatz (5) aufweist, wobei der Fortsatz (13) den NH-Sicherungseinsatz (5) an den kontaktmesserfreien Seiten umgreift und fixiert.

5. Überspannungsschutzeinrichtung nach Anspruch 1,
**dadurch gekennzeichnet, dass**
das Gehäuse (1) einen gehäuseoberseitig befindlichen, durchgehenden Schlitz (14) zur Aufnahme der Neutralleiterschiene (6) aufweist.

6. Überspannungsschutzeinrichtung nach Anspruch 5,
**dadurch gekennzeichnet, dass**
am Gehäuse (1) ein Klemmbügel (15) zum Fixieren der Neutralleiterschiene (6) ausgebildet ist.

7. Überspannungsschutzeinrichtung nach einem der vorangegangenen Ansprüche,
**dadurch gekennzeichnet, dass**
am oder im Gehäuse (1) ein Ansatzpunkt zum Gegenhalten des NH-Sicherungsansatzes (5) beim Ziehen der aufgesteckten Überspannungsschutzeinrichtung vorgesehen ist.

8. Überspannungsschutzeinrichtung nach einem der vorangegangenen Ansprüche,
**dadurch gekennzeichnet, dass**
diese einpolig oder mehrpolig im Gehäuseverbund ausgeführt ist.

## Claims

1. Overvoltage protection device, consisting of an insulating housing (1) for receiving at least one surge arrestor, in particular a spark gap and/or a varistor, wherein the housing (1) has openings for the electrical connection and for the mechanical fixing and at least one flat housing underside,
**characterized in that**
the housing underside (2) has apertures (3), of which the contour and spacing is designed to correspond to the grip tabs (4) of a low-voltage power fuse insert (5), in such a way that the housing (1) can be attached to a low-voltage power fuse insert or a group of low-voltage power fuse inserts and connected to the latter, wherein at least one of the grip tabs (4) can be contacted electrically by means of connection elements located in the housing interior, wherein means for receiving a neutral conductor and/or connecting the surge arrestor having a neutral conductor, in particular a neutral conductor rail (6), are provided on or in the housing (1).

2. Overvoltage protection device according to Claim 1, **characterized in that** grip tabs (16) typical of a low-voltage power fuse are formed, in particular integrally moulded, on a housing side opposite to the housing underside (2).

3. Overvoltage protection device according to either of the preceding claims,
**characterized in that** fork contacts (10) with a slit-like opening (11), which are connected to the respective surge arrestor in the housing interior, extend from the housing underside (2), wherein, when attached, the respective slit-like opening (11) engages around a respective low-voltage power fuse contact blade (12) and produces an electrical contact connection.

4. Overvoltage protection device according to one of the preceding claims,
**characterized in that** the housing (1) has an extension (13) for an assembly with a low-voltage power fuse insert (5), wherein the extension (13) engages around and fixes the low-voltage power fuse insert (5) on the sides without contact blades.

5. Overvoltage protection device according to Claim 1, **characterized in that** the housing (1) has a continuous slit (14) on the housing upper side to receive the neutral conductor rail (6) .

6. Overvoltage protection device according to Claim 5, **characterized in that** a clamping clip (15) for fixing the neutral conductor rail (6) is formed on the housing (1).

7. Overvoltage protection device according to one of the preceding claims,
**characterized in that** a starting point for holding the low-voltage power fuse insert (5) when pulling the attached overvoltage protection device is provided on or in the housing (1) .

8. Overvoltage protection device according to one of the preceding claims,
**characterized in that** this is single-pole or multi-pole in the housing assembly.

## Revendications

1. Dispositif de protection contre les surtensions, composé d'un boîtier (1) isolant destiné à accueillir au moins un parasurtenseur, notamment un éclateur et/ou une varistance, le boîtier (1) possédant des ouvertures servant au raccordement électrique et servant au blocage mécanique ainsi qu'au moins un côté inférieur de boîtier plan,
**caractérisé en ce que**
le côté inférieur de boîtier (2) possède des traversées (3) dont le contour et l'espacement sont configurés en correspondance avec les languettes de préhension (4) d'un insert de fusible NH (5), de telle sorte que le boîtier (1) peut être enfiché sur un insert de fusible NH ou un groupe d'inserts de fusible NH et être relié à ceux-ci, un contact électrique pouvant être établi avec au moins l'une des languettes de préhension (4) au moyen d'éléments de raccordement qui se trouvent à l'intérieur du boîtier, des moyens destinés à recevoir un conducteur neutre et/ou à connecter le parasurtenseur à un conducteur neutre, notamment une barre-bus de neutre (6), se trouvant sur ou dans le boîtier (1).

2. Dispositif de protection contre les surtensions selon la revendication 1, **caractérisé en ce que** des languettes de préhension (16) types pour fusible NH sont configurées, notamment façonnées, au niveau d'un côté de boîtier à l'opposé du côté inférieur de boîtier (2).

3. Dispositif de protection contre les surtensions selon l'une des revendications précédentes, **caractérisé en ce que** des contacts en fourche (10) avec ouverture (11) en forme de fente, reliés au parasurtenseur respectif à l'intérieur du boîtier, s'étendent depuis le côté inférieur de boîtier (2), l'ouverture (11) en forme de fente respective, à l'état enfiché, entourant une lame de contact de fusible NH (12) respective et établissant une liaison de contact électrique.

4. Dispositif de protection contre les surtensions selon l'une des revendications précédentes, **caractérisé en ce que** le boîtier (1) possède un prolongement (13) pour une combinaison avec un insert de fusible NH (5), le prolongement (13) entourant et bloquant l'insert de fusible NH (5) au niveau des côtés exempts de lame de contact.

5. Dispositif de protection contre les surtensions selon la revendication 1, **caractérisé en ce que** le boîtier (1) possède une fente (14) traversante, se trouvant sur le côté supérieur du boîtier, destinée à recevoir la barre-bus de neutre (6).

6. Dispositif de protection contre les surtensions selon la revendication 5, **caractérisé en ce qu'**un étrier de serrage (15) servant au blocage de la barre-bus de neutre (6) est formé sur le boîtier (1).

7. Dispositif de protection contre les surtensions selon l'une des revendications précédentes, **caractérisé en ce qu'**un point d'appui servant à retenir l'insert de fusible NH (5) lors d'une traction sur le dispositif de protection contre les surtensions est présent dans ou sur le boîtier (1).

8. Dispositif de protection contre les surtensions selon l'une des revendications précédentes, **caractérisé en ce que** celui-ci est réalisé unipolaire ou multipolaire dans la combinaison de boîtier.
